# EUROPÄISCHE PATENTANMELDUNG

(11) **EP 1 422 451 A1**
(43) Veröffentlichungstag der Anmeldung: **26.05.2004**
(21) Anmeldenummer: 03021979.4
(22) Anmeldetag: 30.09.2003
(51) Int. Cl.: F16K 1/12, F24D 19/10, G05D 23/12, G05D 27/00, F16K 11/044

(54) **Ventilbaugruppe**

(30) Priorität: 20.11.2002 DE 10254239
(71) Anmelder: HONEYWELL AG, 63067 Offenbach am Main (DE)
(72) Erfinder: Wehowsky, Wilfried, 58706 Menden (DE); Sanders, Bernhard, 59755 Arnsberg (DE)
(74) Vertreter: Fritz, Edmund Lothar, Dipl.-Chem.

(57) **Zusammenfassung**

Die vorliegende Erfindung betrifft eine Ventilbaugruppe für die Regelung zweier voneinander unabhängiger Wasserkreisläufe umfassend eine Ventil-Membran-Einheit mittels derer eine Durchflussmenge an Wasser für den ersten Wasserkreislauf geregelt wird und ein zweites Ventil mit einem Verschlusselement (13), welches den Durchfluss einer Wassermenge für den zweiten Wasserkreislauf regelt, wobei die Ventil-Membran-Einheit (14,15) auf das zweite Ventil mit dem Verschlussglied (13) einwirkt und die Wassermenge, die durch dieses zweite Ventil strömt und dessen Verschlussglied über die Ventil-Membran-Einheit (14,15) geregelt wird,
dadurch gekennzeichnet, dass die Ventil-Membran-Einheit (14,15) in einem von dem ersten Wasserkreislauf durchströmten Bereich des Gehäuses (11) der Ventil-Membran-Einheit (14,15) angeordnet ist.

## Beschreibung

Die vorliegende Erfindung betrifft eine Ventilbaugruppe für die Regelung zweier voneinander unabhängiger Wasserkreisläufe umfassend eine Ventil-Membran-Einheit mittels derer eine Durchflussmenge an Wasser für den ersten Wasserkreislauf geregelt wird und ein zweites Ventil mit einem Verschlusselement, welches den Durchfluss einer Wassermenge für den zweiten Wasserkreislauf regelt, wobei die Ventil-Membran-Einheit auf das zweite Ventil mit dem Verschlussglied einwirkt und die Wassermenge, die durch dieses zweite Ventil strömt und dessen Verschlussglied über die Ventil-Membran-Einheit geregelt wird.

Ventilbaugruppen der genannten Art können beispielsweise in Heizkreisverteilern im Bereich von Wohnungsanschlüssen einer Fernwärmeübergabestation oder dergleichen zum Einsatz kommen. Andere Einsatzgebiete sind ebenfalls denkbar, insbesondere überall dort, wo ein erster Wasserkreislauf, beispielsweise ein Warmwasserkreislauf (Brauchwasser) einerseits und ein zweiter Wasserkreislauf beispielsweise einer Heizungsanlage vorhanden ist die gegebenenfalls aus einer Wärmequelle gespeist werden können. Bei der beispielhaft genannten zuvor erwähnten Fernwärmeübergabestation für einen Wohnungsanschluss wird zum Beispiel über einen Wärmetauscher warmes Wasser (Brauchwasser) erwärmt für den Warmwasserbedarf einer Wohnung, wobei andererseits warmes Heizwasser geliefert wird. Diese beiden Wasserkreisläufe sind im Ventil voneinander getrennt, wobei das Heizungswasser in der Regel in einem geschlossenen Kreislaufsystem geführt wird und in dem Heizungswasser Verschmutzungen enthalten sein können, was jedoch für den Betrieb unerheblich ist. Dagegen handelt es sich bei dem gezapften Warmwasser um Wasser von Trinkwasserqualität, so dass sich beide Wasserkreisläufe nicht vermischen dürfen. Bei solchen Anlagen wird in der Regel in einer Grundstellung der Ventilbaugruppe der Heizungskreislauf bedient.

Wenn nun Warmwasserbedarf besteht erfolgt eine Umschaltung auf Warmwasserbeheizung, wobei die Leistung auf der Heizseite zurückgeht. Durch das Zapfen des Warmwassers entsteht ein Druckabfall, der auf einen Membranantrieb wirkt, was wiederum zu einer Hubbewegung/Umschaltung führt. Die Nachteile der bestehenden Ventilbaugruppen dieser Art liegen darin, dass die Ventile meistens keine regelnde Funktion sondern eine schaltende Funktion haben. Da die bestehenden Ventile aus zwei Ventilgruppen aufgebaut sind und zusätzlich ein Membranantrieb vorhanden ist, ergibt sich eine relativ viel Platz in Anspruch nehmende Bauform.

Ein weiterer Nachteil bei bekannten Ventilbaugruppen dieser Art besteht darin, dass der Membranantrieb nicht beziehungsweise nicht ausreichend mit Wasser durchströmt wird, so dass sich dort stagnierendes Wasser ergibt und die Gefahr von Legionellenbildung besteht. Für die Membran ist bei den bekannten Ventilen ein eigener Antrieb vorgesehen. Die Membran befindet sich in einer separaten Kammer mit Totwasser. Außerdem ist bei bekannten Ventilbaugruppen dieser Art ein Nachteil häufig dadurch gegeben, dass keine ausreichende Trennung zwischen der Warmwasserseite und der Heizseite in der Ventilbaugruppe gegeben ist, so dass es beim Auftreten von undichten Dichtungen zu einer Vermischung der Wasserkreisläufe kommen kann, da verschmutztes Heizwasser in den Warmwasserkreislauf eintritt.

Aufgabe der vorliegenden Erfindung ist es, eine Ventilbaugruppe der eingangs genannten Gattung zu schaffen, bei der die Ventil-Membran-Einheit regelnd arbeitet, so dass sich eine Abhängigkeit, z. B. ein Proportionalverhalten, ergibt und bei zunehmender Warmwasser-Zapfmenge auch ein Heizwasserstrom nach und nach ansteigt. Weiterhin wird angestrebt, dass eine solche Ventil-Baugruppe eine einfachere kompakte Bauform aufweist und eine sichere Trennung zwischen der Warmwasserseite und der Heizseite der Ventil-Baugruppe gegeben ist.

Die Lösung dieser Aufgabe liefert eine erfindungsgemäße Ventil-Baugruppe der eingangs genannten Gattung mit den kennzeichnenden Merkmalen des Hautpanspruchs. Die erfindungsgemäße Lösung sieht vor, dass die Ventil-Membran-Einheit von Wasser durchströmt wird, so dass es zu keiner Totwasserzone mit der Gefahr von Legionellenbildung kommt. Ein separater Antrieb für die Ventil-Membran-Einheit ist nicht notwendig, da bei der erfindungsgemäßen Lösung mittels des Wasserstroms des gezapften Wassers, welches zum Beispiel zu einem Wärmetauscher strömt, der im Gegenstrom durch den Wärmetauscher strömende zur Erwärmung dienende Heizwasserstrom geregelt wird.

Vorzugsweise wird erfindungsgemäß eine Ventil-Membran-Einheit verwendet, bei der eine Hülse mit einer Membran verbunden ist, so dass die Hülse axial beweglich gelagert ist, wobei die Hülse von Wasser durchströmt wird und durch Beaufschlagung über den Wasserdruck eine Axialbewegung der Hülse und somit eine Hubbewegung erfolgt. Diese Hubbewegung wird über Stiftelemente oder Stößel oder dergleichen auf das zweite Ventil übertragen und führt damit ebenfalls zu einer Hubbewegung dieses zweiten Ventils. Diese Anordnung kann beispielsweise so aufgebaut sein, dass bei Zapfen von Brauchwasser und zunehmendem Wasserzulauf an der Membraneingangsseite und somit zunehmender Öffnung der Ventil-Membran-Einheit ein den Wärmetauscher verlassender Heizwasserstrom, der den Wärmetauscher im Gegenstrom durchströmt und dadurch das zulaufende Wasser im Wärmetauscher erwärmt ebenfalls zunimmt und zwar vorzugsweise proportional, da sich das zweite Ventil öffnet. Durch diese Öffnungsbewegung des zweiten Ventils, kann man, wenn man dieses als Dreiwegeventil ausbildet, gleichzeitig beispielsweise den Rücklauf aus dem Heizungswasserkreislauf schließen, so dass mit zunehmender Warmwasser-Zapfmenge die Heizleistung abnimmt. Dies ist beispielsweise bei Fernwärmeübergabestationen sinnvoll, da diese nur eine vorgegebene Maximalleistung liefern, so dass bei erhöhtem Warmwasserbedarf weniger an Heizleistung zur Verfügung steht.

Gemäß einer bevorzugten Weiterbildung der Erfindung kann man eine solche Ausbildung der Ventil-Baugruppe konstruktiv beispielsweise derart lösen, dass man eine mit der Membran verbundene radial durchströmte geschlitzte Hülse mit einem Stößel oder Stift versieht, welcher in axialer Verlängerung auf einen Ventilstößel des zweiten Ventils einwirkt, an dessen Ende sich das Verschlussglied dieses zweiten Ventils befindet. Wenn dann bedingt durch den Wasserdruck des gezapften Brauchwassers die Ventil-Membran-Einheit weiter öffnet, wird deren Hubbewegung (Axialbewegung) über die beweglich gelagerte Hülse und den mit dieser verbundenen Stift auf den Stößel des zweiten Ventils übertragen. Auf diesen Stößel kann die Federkraft beispielsweise einer Druckfeder einwirken entgegen der Bewegungsrichtung der Hülse bei zunehmendem Wasserdruck, so dass bei abnehmendem Wasserdruck diese Druckfeder eine Rückstellkraft auf die Hülse bewirkt, wodurch diese in ihre Schließposition bewegt wird. In dieser Schließposition kann sich gemäß einer Weiterbildung der Erfindung diese axial bewegliche Hülse gegen einen feststehenden Kegel bewegen, d. h., dass sich in diesem Fall quasi der Ventilsitz an der Hülse befindet und zwar an der dem Stift abgewandten Seite. Das zweite Ventil kann im Prinzip als Dreiwegeventil ausgebildet sein mit einem Ventilteller oder Ventilkegel, der sich an einem Ende eines Ventilstößels befindet und der in der Schließposition einen Ausgang des Wärmetauschers verschließt, wenn kein warmes Brauchwasser gezapft wird. In diesem Fall ist dann das zweite Ventil beispielsweise für eine von einem Wohnungsrücklauf des Heizkreises kommende Leitung geöffnet, so dass eine Verbindung aus der Rücklaufleitung der Wohnung zur Rücklaufleitung des Heizungsstrangs möglich ist. In den Übergangsstellungen bei Zapfen einer geringeren Menge an warmem Brauchwasser ist dann die Rücklaufleitung vom Wohnungsrücklauf teilweise geöffnet, so dass sich die von der Fernwärmeübergabestation gelieferte Heizleistung auf den Heizungskreislauf und den Warmwasserkreislauf aufteilt.

Selbstverständlich sind mannigfaltige andere Anwendungen für eine Ventilbaugruppe der erfindungsgemäßen Art denkbar. Ein wesentlicher Punkt liegt jedoch darin, dass die Ventil-Membran-Einheit von dem Wasser des einen Wasserkreislaufs durchströmt wird und kein zusätzlicher Antrieb für die Ventil-Membran-Einheit notwendig ist, da der Wasserdruck des anströmenden Wassers selbst die jeweilige Position der Ventil-Membran-Einheit bestimmt und über diese auch die jeweilige Stellung des zweiten Ventils geregelt wird. Die erfindungsgemäße Ventil-Baugruppe besteht vorzugsweise aus zwei separaten Gehäuseeinheiten, die miteinander verbindbar sind und dabei so konstruiert sind, dass gewährleistet ist, dass aus dem Heizungswasserkreislauf kein Wasser in den Warmwasserkreislauf (Brauchwasser) gelangen kann.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben. Dabei zeigen
- Fig. 1a: einen Längsschnitt durch eine Ventilbaugruppe gemäß der Erfindung in einer ersten Ventilstellung;
- Fig. 1b: einen Längsschnitt durch eine Ventilbaugruppe gemäß der Erfindung in einer zweiten Ventilstellung;
- Fig. 2: eine schematische Darstellung einer Anlage einer fernwärmeversorgten Wohnungsanschlusseinheit, bei der die erfindungsgemäße Ventil-Baugruppe zur Regelung der Heizung und der Warmwasserbereitung eingesetzt wird.

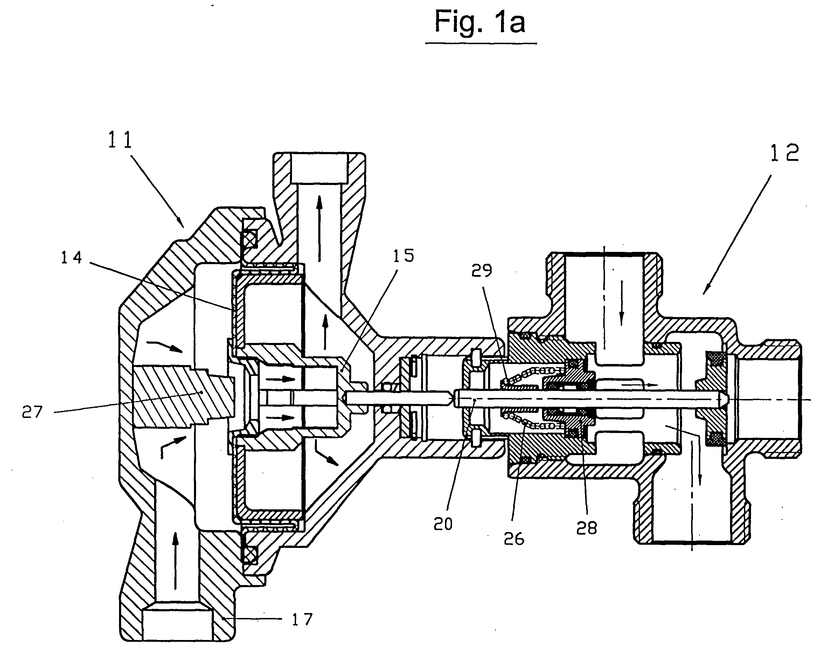

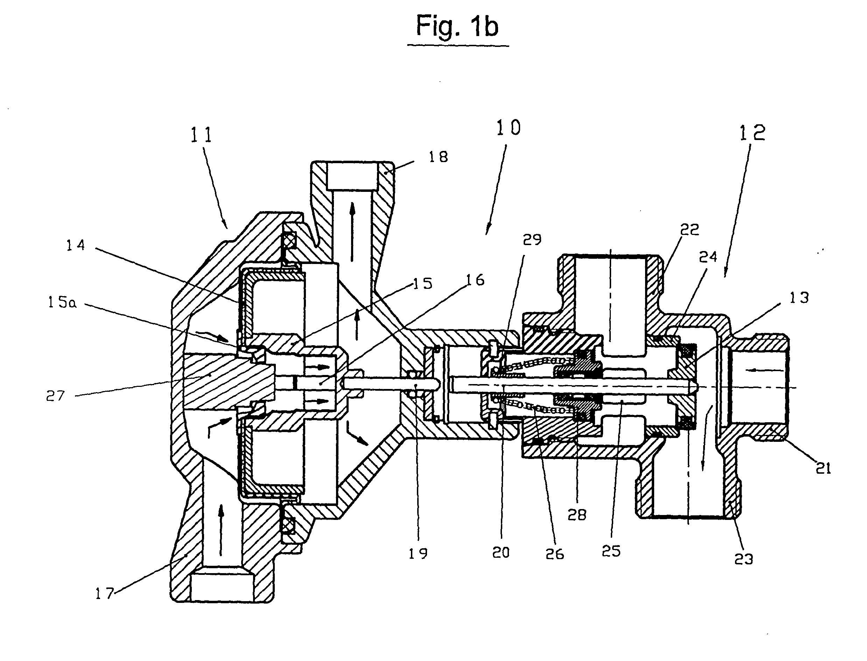

Zunächst wird auf Fig. 1 a und 1 b Bezug genommen. Die Darstellung zeigt im Längsschnitt eine erfindungsgemäße Ventilbaugruppe, die insgesamt mit 10 bezeichnet ist und im Prinzip zwei Einheiten umfasst, nämlich ein erstes Gehäuse 11 für eine Ventilmembraneinheit und ein zweites Gehäuse 12 für ein zweites Ventil, wobei die Ventil-Membran-Einheit regelnd auf die Position eines Verschlussglieds 13 des zweiten Ventils einwirkt. Die Ventil-Membran-Einheit umfasst dabei eine Membran 14 und eine mit dieser verbundene Hülse 15, wobei die Hülse 15 geschlitzt ist und das Wasser, welches wiederum durch die eingezeichneten Pfeile angedeutet ist an der linken Seite axial in die Hülse 15 eintritt, diese radial durchströmt und über die Schlitze 16 radial nach außen verlässt. Die Membran 14 ist mit der Hülse 15 fest verbunden, beispielsweise an dieser verklemmt, durch eine Verschraubung festgelegt oder dergleichen. Das Ventilgehäuse 11 umfasst einen Kaltwasserzulaufstutzen 17, in den zulaufendes Kaltwasser in Pfeilrichtung eintritt, welches dann in die Hülse 15 hinein und durch die Hülse radial nach außen strömt und dann über einen Ausgangsstutzen 18 das Ventilgehäuse 11 verlässt. Da die Hülse 15 über die Membran 14 in axialer Richtung beweglich gelagert ist, wird bei zunehmendem Wasserdruck des anströmenden Kaltwassers die Hülse 15 beaufschlagt und vollführt eine axiale Hubbewegung in der Zeichnung nach rechts, so dass sich der Stift 19 ebenfalls axial bewegt. Das der Hülse 15 abgewandte Ende des Stifts 19 drückt dabei gegen das in der Zeichnung linke Ende des Stößels 20, wodurch wiederum eine axiale Hubbewegung des Verschlussglieds 13 (Ventilteller) in der Zeichnung nach rechts verursacht wird, in eine Position, in der der Zulaufstutzen 21 des rechten Ventilgehäuses 12, welcher beispielsweise mit dem Heizungsrücklauf der Wohnungsheizung verbunden ist, geschlossen wird (Fig. 1 b). Da es sich bei dem zweiten Ventil 12 rechts in der Zeichnung um ein Dreiwegeventil handelt, wird gleichzeitig bei Bewegung des Verschlussglieds 13 nach rechts der Durchgang für einen Wasserstrom, welcher von dem oberen Zulaufstutzen 22 des Ventilgehäuses 12 in Pfeilrichtung durch das zweite Ventil strömt, geöffnet, so dass dieser Wasserstrom dann über den unteren Ausgangsstutzen 23 das Gehäuse des in der Zeichnung rechten zweiten Ventils verlassen kann. Innerhalb des Ventilgehäuses 12 befindet sich ebenfalls eine Hülse 24 mit Schlitzen 25, so dass das über den Zulaufstutzen 22 eintretende Wasser zunächst radial in die Hülse 24 eintritt und dann die Hülse 24 in axialer Strömungsrichtung verlässt und in Pfeilrichtung nach unten strömt in den Ausgangsstutzen 23.

Bei nachlassendem Wasserdruck an der Kaltwasserzulaufseite 17 bewirkt die Rückstellkraft der Druckfeder 26, dass sich der Ventilstößel 20, der Stift 19 und damit die Hülse 15 der Ventilmembraneinheit in der Zeichnung nach links bewegen, so dass bei fehlendem Wasserzulauf durch den Zulaufstutzen 17 schließlich die Hülse 15 sich mit ihrem Sitz 15a an den festen Kegel 27 des Ventilgehäuses 11 anlegt und die Ventilmembraneinheit verschließt (Fig. 1a). Die Druckfeder 26 ist einerseits mit ihrem einen Ende an einer Querwand einer Fettkammer 28 gelagert und hat an ihrem anderen Ende ein Widerlager an einem Niet 29, welcher fest auf dem Ventilstößel 20 sitzt. In der Fettkammer 28 befindet sich in der Regel ein Schmiermittel, um so die Axialbewegung des Ventilstößels 20, der die Fettkammer 28 mittig durchsetzt, zu erleichtern. Außerdem ist die Fettkammer durch Dichtungen mehrfach gut abgedichtet. Das Ventilgehäuse 11 ist zudem ein separates Ventilgehäuse, welches unabhängig ist von dem zweiten Ventilgehäuse 12, mit diesem aber mechanisch verbunden wird. Man erhält so eine effektive Trennung des von dem Heizwasser durchströmten rechten Ventilgehäuses 12 von dem linken Ventilgehäuse 11, dessen Inneres von Wasser für die Warmwasserzubereitung durchströmt wird, welches in einwandfreier sauberer Qualität benötigt wird. Die erfindungsgemäße Ventilbaugruppe weist ein z. B. proportionales Regelverhalten auf, so dass es keinen einmaligen Umschaltvorgang gibt. Dies bedeutet, dass allmählich mit steigender Menge an gezapftem Kaltwasser für die Warmwasserbereitung auch allmählich der Heizwasserstrom, der durch das zweite Ventil 12 strömt und für die Erwärmung des Warmwassers zum Beispiel in einem Wärmetauscher dient, zunimmt. Gleichzeitig nimmt der Heizwasserstrom, der durch die Heizkörper fließt proportional ab, da die Verbindung zum Rücklauf der Wohnungsheizungsanlage allmählich geschlossen wird. Ein separater Antrieb für die Ventilmembraneinheit ist nicht notwendig, da die Membran 14 von dem über den Zulaufstutzen 17 zulaufenden Kaltwasser beaufschlagt wird. Die Membran 14 bildet quasi eine elastische Aufhängung für die Hülse 15 und der Druck des anströmenden zulaufenden Wassers bestimmt die Öffnungsposition der Hülse 15, das heißt deren axiale Abstandsposition gegenüber dem Kegel 27. Die proportionale Rückbewegung der Ventilmembraneinheit bei abnehmendem Wasserdruck des zulaufenden Wassers wird durch die Rückstellkraft der Druckfeder 26 gewährleistet. Das Innere des Ventilgehäuses 11 ist vollständig von dem zulaufenden Wasser durchströmt, so dass es keine Totzonen gibt.

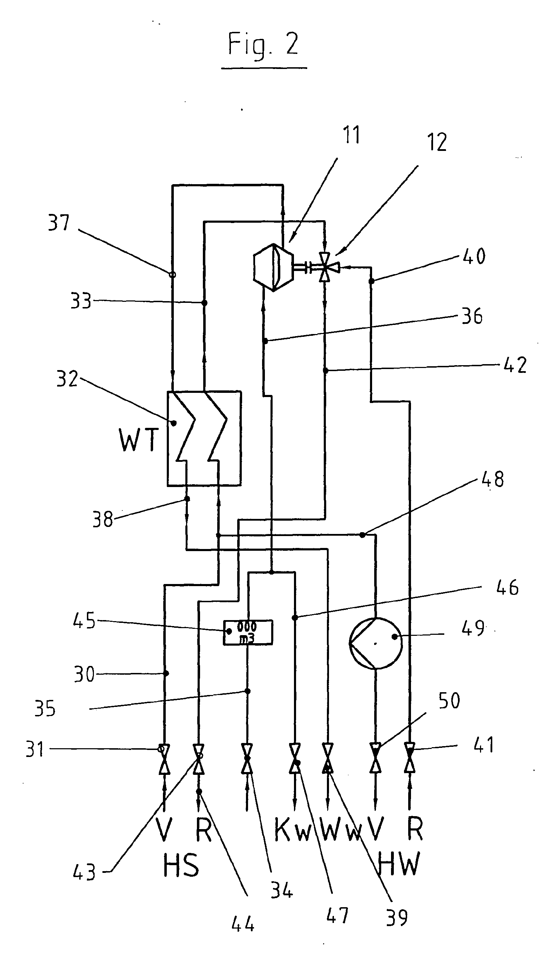

Nachfolgend wird unter Bezugnahme auf Fig. 2 ein mögliches Anwendungsbeispiel für die erfindungsgemäße Ventilbaugruppe näher erläutert. Die Darstellung zeigt eine schematische Ansicht einer Anlage einer fernwärmeversorgten Wohnungsanschlusseinheit, bei der die erfindungsgemäße Ventilbaugruppe zur Regelung der Warmwasserbereitung und der Heizung eingesetzt wird.

Wie Fig. 2 zeigt ist eine über ein Ventil 31 absperrbare Leitung 30 für den Vorlauf aus einem Heizungsstrang vorgesehen, über die das von der Fernwärme gelieferte warme Heizwasser zu einem Wärmetauscher 32 geleitet wird, von wo aus es dann nach Durchgang durch den Wärmetauscher über die Leitung 33 zu einem Dreiwegeventil 12 strömt, welches dem zuvor anhand von Fig. 1 beschriebenen zweiten Ventil entspricht. Andererseits gelangt Kaltwasser über eine über ein Ventil 34 absperrbare Kaltwasserversorgungsleitung 35, die sich nachfolgend verzweigt, sowie die Zweigleitung 36 zu einer Ventil-Membran-Einheit 11. Nach dem Durchströmen der Ventil-Membran-Einheit 11 gelangt das eingehende Kaltwasser über die Leitung 37 zu dem Wärmetauscher 32 und durchströmt diesen im Gegenstrom zu dem von der Fernwärmeversorgung über die Leitung 30 eingehenden Warmwasser. Dieses kalte Wasser wird im Wärmetauscher erwärmt und verlässt diesen dann über die Leitung 38, um anschließend als erwärmtes Brauchwasser über diese gegebenenfalls über ein Ventil 39 absperrbare Leitung eine Wohnungseinheit mit warmem Brauchwasser zu versorgen. Die Ventilmembraneinheit 11 und das Dreiwegeventil 12 bilden zusammen die erfindungsgemäße Ventilbaugruppe.

An das Dreiwegeventil 12 ist eine zweite Eingangsleitung 40 angeschlossen, die vom Heizungsrücklauf der Wohnungseinheit kommt und gegebenenfalls auch über ein Ventil 41 absperrbar ist. In das Dreiwegeventil 12 gelangen also einmal die Zulaufleitung 33 mit dem bereits abgekühlten Heizwasser aus dem Wärmetauscher 32 und einmal die Rücklaufleitung 40 aus dem Heizungsrücklauf der Wohnung. Das Heizwasser aus dem Rücklauf verlässt das Dreiwegeventil 12 über die Ausgangsleitung 42 und gelangt von dort über das absperrbare Ventil 43 in die Rücklaufleitung 44 der Fernwärmeversorgung.

Die Kaltwasserleitung 35 verzweigt sich hinter der Wasseruhr 45 und führt zum einen als Kaltwasserleitung 46 direkt zur Wohnungseinheit für die Versorgung mit Kaltwasser und zum anderen führt die Zweigleitung 36 zu der Ventil-Membran-Einheit 11. Die Kaltwasserleitung 46 zur Wohnungseinheit ist wiederum über ein Ventil 47 absperrbar.

Die Leitung 30 mit dem Heizwasser aus dem Vorlauf der Fernwärmeversorgung verzweigt sich ebenfalls und führt einmal unmittelbar zur Pumpe 32 und zum anderen als Zweigleitung 48 über die Pumpe 49 und das Absperrventil 50 in den Heizungsvorlauf der Wohnungseinheit, um diese mit Heizungswärme zu versorgen.

Die Funktion der erfindungsgemäßen Ventilbaugruppe mit der Ventil-Membran-Einheit 11 und dem zweiten Ventil 12, welches in der Anwendung gemäß Fig. 2 ein Dreiwegeventil ist, wurde bereits unter Bezugnahme auf Fig. 1 a und Fig. 1 b erläutert. Dadurch dass die Ventil-Membran-Einheit 11 über die Kaltwasserzulaufleitung 36 mit Kaltwasser beaufschlagt wird kann bei zunehmender Menge an gezapftem Kaltwasser der über die Leitung 30, 33 durch den Wärmetauscher 32 strömende Heizwasserstrom ebenfalls erhöht werden, so dass die Leistung des Wärmetauschers 32 entsprechend erhöht wird. Die Leistung des Wärmetauschers wird somit über die Menge des für die Warmwasserversorgung (warmes Brauchwasser) der Wohnung benötigten zuströmenden Kaltwassers geregelt. Die Ventilstellung in dem Dreiwegeventil 12 ist abhängig von der Menge an gezapftem Warmwasser. Wird hier eine hohe Leistung für den Wärmetauscher 32 benötigt, wird die Rücklaufleitung 40 aus dem Heizungsrücklauf der Wohnung abgesperrt und damit die Heizleistung gedrosselt, während die Leitung 33 zum Dreiwegeventil 12 dann geöffnet wird und dieses den Durchgang freigibt zur Leitung 42. Wird dagegen kein warmes Brauchwasser benötigt, ist die Leitung 33 abgesperrt und das Dreiwegeventil 12 ist frei für den Durchgang von der Leitung 40 des Heizungsrücklaufs zur Rücklaufleitung 42 des Strangs der Fernwärme.

## Patentansprüche

1. Ventilbaugruppe für die Regelung zweier voneinander unabhängiger Wasserkreisläufe umfassend eine Ventil-Membran-Einheit mittels derer eine Durchflussmenge an Wasser für den ersten Wasserkreislauf geregelt wird und ein zweites Ventil mit einem Verschlusselement, welches den Durchfluss einer Wassermenge für den zweiten Wasserkreislauf regelt, wobei die Ventilmembraneinheit auf das zweite Ventil mit dem Verschlussglied einwirkt und die Wassermenge, die durch dieses zweite Ventil strömt und dessen Verschlussglied über die Ventil-Membran-Einheit geregelt wird,
**dadurch gekennzeichnet, dass** die Ventil-Membran-Einheit (14, 15) in einem von dem ersten Wasserkreislauf durchströmten Bereich des Gehäuses (11) der Ventil-Membran-Einheit angeordnet ist.

2. Ventilbaugruppe nach Anspruch 1, **dadurch gekennzeichnet, dass** die Ventil-Membran-Einheit (14, 15) durch den Druck des über einen Zulaufstutzen (17) des Gehäuses (11) anströmenden Wassers des ersten Wasserkreislaufs beaufschlagt wird.

3. Ventilbaugruppe nach Anspruch 1 oder 2, **dadurch gekennzeichnet, dass** die Ventil-Membran-Einheit eine Membran (14) und eine mit der Membran verbundene an dieser gelenkig in axialer Richtung beweglich gelagerte Hülse (15) umfasst, wobei die Hülse (15) von dem Wasser des ersten Wasserkreislaufs durchströmt wird.

4. Ventilbaugruppe nach Anspruch 3, **dadurch gekennzeichnet, dass** die Hülse (15) radiale Schlitze (16) aufweist und das Wasser in diese von einer Seite her zunächst in axialer Richtung einströmt und dann die Hülse (15) über die Schlitze (16) in radialer Richtung verlässt.

5. Ventilbaugruppe nach einem der Ansprüche 1 bis 4, **dadurch gekennzeichnet, dass** das Gehäuse (11) der Ventil-Membran-Einheit einen Ablaufstutzen (18) aufweist, der stromabwärts der von dem Wasser des ersten Wasserkreislaufs durchströmten Hülse (15) angeordnet ist.

6. Ventilbaugruppe nach einem der Ansprüche 1 bis 5, **dadurch gekennzeichnet, dass** ein mit der Hülse (15) verbundener in axialer Verlängerung der Hülse angeordneter Stift (19) vorgesehen ist, der auf den Ventilstößel (20) des zweiten Ventils einwirkt.

7. Ventilbaugruppe nach einem der Ansprüche 1 bis 6, **dadurch gekennzeichnet, dass** das zweite Ventil in einem separaten Ventilgehäuse (12) angeordnet ist, welches mit dem Ventilgehäuse (11) der Ventil-Membran-Einheit lösbar verbindbar ist, wobei die beiden Wasserkreisläufe des durch das Ventilgehäuse (11) strömenden Wassers und des durch das Ventilgehäuse (12) strömenden Wassers sicher voneinander getrennt sind.

8. Ventilbaugruppe nach einem der Ansprüche 1 bis 7, **dadurch gekennzeichnet, dass** sich an dem dem Stift (19) abgewandten Ende des Ventilstößels (20) das Verschlussglied (13) des zweiten Ventils befindet.

9. Ventilbaugruppe nach einem der Ansprüche 1 bis 8, **dadurch gekennzeichnet, dass** das zweite Ventil ein Dreiwegeventil ist.

10. Ventilbaugruppe nach einem der Ansprüche 1 bis 9, **dadurch gekennzeichnet, dass** das Ventilgehäuse (12) des zweiten Ventils mindestens einen Zulaufstutzen (22) und mindestens einen Ablaufstutzen (23) aufweist.

11. Ventilbaugruppe nach Anspruch 9 oder 10, **dadurch gekennzeichnet, dass** das Ventilgehäuse (12) des zweiten Ventils einen ersten Zulaufstutzen (22), einen zweiten Zulaufstutzen (21) mit zu der Achse des ersten Zulaufstutzens (22) etwa senkrechter Achse und einen Ablaufstutzen (23) aufweist.

12. Ventilbaugruppe nach Anspruch 11, **dadurch gekennzeichnet, dass** der Ablaufstutzen (23) an der dem Zulaufstutzen (22) gegenüberliegenden Seite des Ventilgehäuses (12) axial zu diesem versetzt angeordnet ist.

13. Ventilbaugruppe nach einem der Ansprüche 1 bis 12, **dadurch gekennzeichnet, dass** auf den Ventilstößel (20) des zweiten Ventils eine vorzugsweise über eine Druckfeder (26) erzeugte Rückstellkraft einwirkt, die der Öffnungsbewegung der Hülse (15) der Ventil-Membran-Einheit entgegenwirkt.

14. Ventilbaugruppe nach einem der Ansprüche 1 bis 13, **dadurch gekennzeichnet, dass** in mindestens einem der Ventilgehäuse (11, 12) mindestens eine Querwand angeordnet ist, die die beiden Wasserkreisläufe voneinander trennt.

15. Ventilbaugruppe nach Anspruch 14, **dadurch gekennzeichnet, dass** eine eine Querwand aufweisende Fettkammer (28) vorgesehen ist, die der Ventilstößel (20) und/oder der Stift (19) durchsetzt.

16. Verwendung einer Ventilbaugruppe nach einem der Ansprüche 1 bis 15 in einer Verteileranlage zur Regelung eines Heizwasserkreislaufs mittels des Wasserstroms eines für eine Warmwasserbereitung vorgesehenen Wasserkreislaufs.

17. Verwendung einer Ventilbaugruppe gemäß Anspruch 16 in einer Verteileranlage zur gleichzeitigen Regelung eines Heizwasserstroms für einen Wärmetauscher und eines Heizwasserstroms einer Heizungsanlage.

18. Verwendung einer Ventilbaugruppe nach Anspruch 15 oder 16 in einer Verteileranlage einer Fernwärmeübergabestation.
